# FASCICULE DE BREVET EUROPEEN

(11) **EP 0 649 248 B1**
(45) Date de publication et mention de la délivrance du brevet: **28.01.1998**
(21) Numéro de dépôt: 94202877.0
(22) Date de dépôt: 05.10.1994
(51) Int. Cl.: H04N 3/32

(54) **Appareil d'affichage d'images avec modulation de vitesse du spot**
Bildanzeigevorrichtung mit Modulation der Lichtpunktgeschwindigkeit
Display apparatus using spot velocity modulation

(30) Priorité: 13.10.1993 FR 9312185
(43) Date de publication de la demande: 19.04.1995
(73) Titulaire: PHILIPS ELECTRONIQUE GRAND PUBLIC, 92150 Suresnes (FR); PHILIPS ELECTRONICS N.V., 5621 BA Eindhoven (NL)
(72) Inventeur: Vilard, Philippe, Société Civile S.P.I.D., F-75008 Paris (FR)
(74) Mandataire: Caron, Jean

(56) Documents cités:
- EP-A- 0 285 114
- EP-A- 0 469 566

## Description

La présente invention concerne un appareil d'affichage d'images muni d'une source de signal vidéo ayant ses informations vidéo affichées par le dit appareil, d'un circuit de balayage horizontal avec un bobinage déviateur horizontal, et d'un circuit de balayage vertical, pour afficher les dites images au moyen d'un spot sur l'écran d'un tube-image, d'un circuit de modulation de vitesse du spot, couplé à la dite source de signal vidéo pour moduler la vitesse horizontale du spot en fonction du contenu vidéo du dit signal vidéo à l'aide d'un bobinage déviateur horizontal annexe, et comportant un circuit de différentiation du signal vidéo suivi d'un amplificateur à transconductance (c'est-à-dire à entrée en tension et sortie en courant) muni en sortie d'un étage de puissance du type générateur de courant dont la sortie de courant est reliée à une première borne du bobinage déviateur horizontal annexe. Le circuit de modulation de vitesse du spot est destiné à donner une apparence plus nette aux transitions de luminance dans une image.

Un circuit de modulation de vitesse du spot est connu du document US-B-5,072,300. Dans ce document est décrit en détail (figure 3) un circuit qui comporte un circuit de différentiation du signal vidéo, suivi d'un amplificateur à transconductance dont la sortie de courant est reliée à une première borne d'un bobinage déviateur horizontal annexe. Le courant principal de ce bobinage, sortant par la seconde borne, est évacué vers une borne de référence de tension (la masse) au travers d'une capacité de liaison.
Un problème rencontré avec de tels montages est le suivant : il faut, pour corriger des variations rapides de luminance, pouvoir induire des variations rapides de courant dans le bobinage annexe déjà mentionné, et comme chacun sait, il faut pour cela vaincre la tension induite par la self-induction du bobinage, ce qui exige des tensions d'alimentation élevées. La tension d'alimentation utilisée par le montage de ce document est de 135 volts, avec un bobinage dont la self-induction est de 6,7 µH.

L'invention se propose de fournir un circuit qui puisse fonctionner avec une tension d'alimentation relativement faible, par exemple de l'ordre d'une trentaine de volts. Bien entendu une solution consiste à diminuer la valeur de la self-induction du bobinage annexe. Néanmoins on est rapidement limité dans cette voie par le fait que les courants à produire deviennent trop importants.
Ce problème est résolu du fait que le circuit de modulation de vitesse comporte en outre un amplificateur de tension muni en sortie d'un étage de puissance du type générateur de tension, dont l'entrée est reliée à la sortie du circuit de différentiation, et dont la sortie de tension est reliée à la seconde borne du bobinage déviateur horizontal annexe.
De préférence, l'étage de puissance de l'amplificateur de tension est constitué essentiellement par un premier transistor d'une première polarité monté selon le montage dit émetteur suiveur, dont le collecteur est connecté à une borne d'alimentation et dont l'émetteur est relié à la seconde borne du bobinage déviateur horizontal annexe et par un second transistor d'une seconde polarité monté aussi selon le montage dit émetteur suiveur, dont le collecteur est connecté à une borne de référence et dont l'émetteur est relié à la seconde borne du bobinage déviateur horizontal annexe, et les bases des deux transistors sont interconnectées et reliées à la sortie d'un préamplificateur de tension qui précède l'étage de puissance et dont l'entrée est reliée à la sortie du circuit de différentiation du signal vidéo.
L'étage de puissance de l'amplificateur à transconductance étant constitué essentiellement par un premier transistor d'une première polarité monté en générateur de courant, premier transistor dont l'émetteur est relié à une borne d'alimentation et dont le collecteur débite dans la première borne du bobinage déviateur horizontal annexe, et par un second transistor d'une seconde polarité monté en générateur de courant, second transistor dont l'émetteur est relié à une borne de référence et dont le collecteur débite aussi dans la première borne du bobinage déviateur horizontal annexe, une diode est avantageusement insérée dans le trajet du courant de collecteur de chacun des deux transistors de l'étage de puissance entre le collecteur et la première borne du bobinage déviateur horizontal annexe, diode montée dans le sens direct par rapport au courant du transistor afférent.
Ceci permet le développement d'une tension de valeur supérieure à celle de la tension d'alimentation du montage, aux bornes du bobinage annexe.
Ces aspects de l'invention ainsi que d'autres aspects plus détaillés apparaîtront plus clairement grâce à la description suivante d'un mode de réalisation non limitatif.
La figure 1 représente schématiquement un téléviseur muni d'un circuit de modulation de vitesse du spot.
La figure 2 représente schématiquement un circuit de modulation de vitesse du spot.
La figure 3 est un schéma détaillé d'une forme de réalisation d'un circuit de modulation de vitesse du spot.

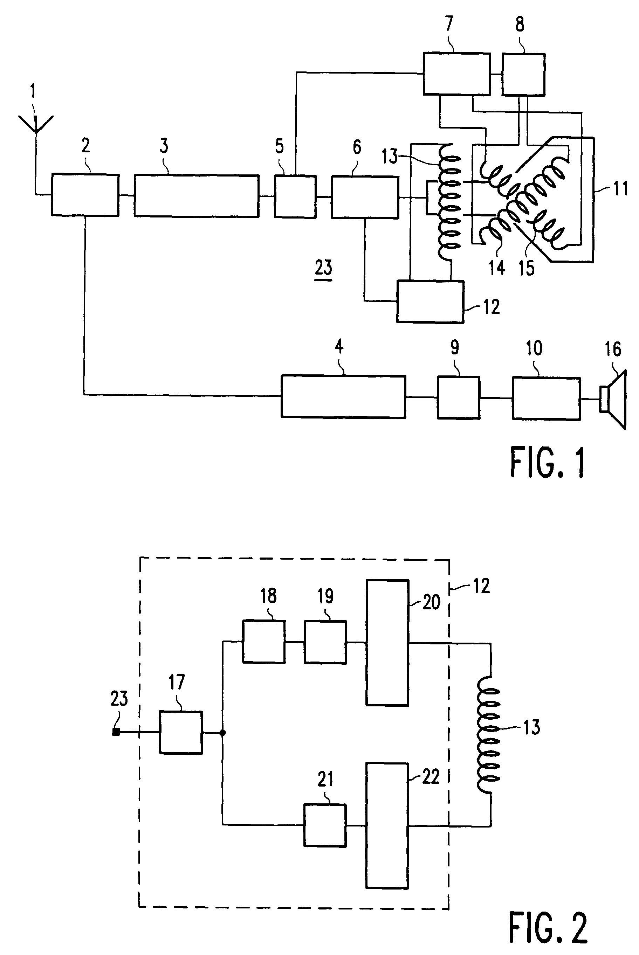

L'invention va être décrite en référence à un téléviseur, mais il faut bien voir qu'elle s'applique à tout appareil d'affichage d'images.
Les principes de la modulation de vitesse du spot et leur incidence sur l'aspect des transitions de luminance sont bien connues. On peut rappeler qu'il s'agit d'une manière artificielle de donner l'impression au spectateur que l'image est mieux définie qu'elle ne l'est en réalité.
Pour obtenir cet effet on fait passer le signal de luminance dans un circuit différentiateur et on applique au système de déviation horizontale du faisceau une différence de vitesse instantanée synchrone avec une transition de la valeur de la luminance. Comme il serait difficile d'introduire une variation de vitesse dans les circuits de déviation horizontale connus, on préfère utiliser un bobinage de déviation annexe, située à proximité des bobinages principaux, et dans lequel on fait passer un courant de correction de la vitesse du spot, proportionnel à la dérivée par rapport au temps du signal de luminance.
Le téléviseur dont le schéma est représenté sur la figure 1 comprend un syntoniseur 2 recevant un signal d'une antenne 1 (ou d'une quelconque autre source), et transposant sa fréquence vers celles nécessitées par un amplificateur à fréquence intermédiaire vidéo 3 et par un amplificateur à fréquence intermédiaire son 4 qui lui font suite.
L'amplificateur à fréquence intermédiaire vidéo 3 est suivi d'un démodulateur 5 qui délivre les signaux vidéo en bande de base à un amplificateur vidéo 6, et des signaux de synchronisation à un étage de balayage ligne 7 et à un étage de balayage trame 8. Les signaux vidéo et de synchronisation utilisés par les modules 6 et 7 peuvent aussi bien venir d'une source extérieure comme un décodeur satellite ou un magnétoscope. L'amplificateur 6 délivre les signaux ad-hoc aux électrodes d'un tube image 11 (tube à rayons cathodiques). Les étages de balayage trame et ligne 8 et 7 délivrent des courants dans des bobinages déviateurs principaux 14 et 15, respectivement "trame" et "ligne".
L'amplificateur à fréquence intermédiaire son 4 est suivi d'un démodulateur 9 qui délivre les signaux audio en bande de base à un amplificateur audio 10, alimentant un haut-parleur 16. Enfin les signaux de luminance sont transmis depuis l'amplificateur vidéo 6 vers un circuit de modulation de vitesse du spot 12, qui délivre un courant de modulation de la vitesse horizontale du spot en fonction du contenu vidéo du dit signal vidéo, dans un bobinage déviateur horizontal annexe 13. Comme le circuit 12 introduit inévitablement des retards sur les signaux, son action risque de ne pas être correctement synchronisée avec le signal vidéo appliqué au tube 11. Pour pallier ce défaut, des circuits de retard (non représentés) d'environ 70 nS sont introduits de façon connue dans le trajet de chacune des composantes de couleur, dans l'amplificateur vidéo 6.
Pour engendrer un courant, proportionnel à la dérivée par rapport au temps du signal de luminance, dans une self-inductance, il faut soit y introduire le dit courant au moyen d'un générateur de courant, soit appliquer au bobinage une tension qui est elle même la dérivée par rapport au temps du courant à obtenir. Dans ce dernier cas il faut prévoir un second circuit différentiateur, c'est pourquoi en général on utilise plutôt un générateur de courant.
Le circuit de modulation de vitesse représenté sur la figure 2 comporte une entrée 23 de signal vidéo connectée à un circuit 17 de différentiation du signal vidéo, suivi d'un étage de réglage de gain 18, d'un premier préamplificateur 19 et d'un premier étage de puissance 20 du type générateur de courant dont la sortie de courant est reliée à une borne du bobinage annexe 13. La sortie du circuit 17 de différentiation est reliée aussi à un second préamplificateur 21 suivi d'un second étage de puissance 22 qui, lui, est du type générateur de tension, et dont la sortie de tension est reliée à l'autre borne du bobinage annexe 13.
Ainsi, bien que l'amplificateur 21,22 soit un générateur de tension, on n'a pas prévu de second circuit différentiateur. En pratique l'amplificateur de tension se comporte comme une alimentation commutée, commandée par le signal issu du circuit différentiateur 17 et reliant, selon le sens du courant désiré, la seconde borne du bobinage annexe 13 (la borne inférieure sur la figure) soit à l'alimentation soit à la masse.

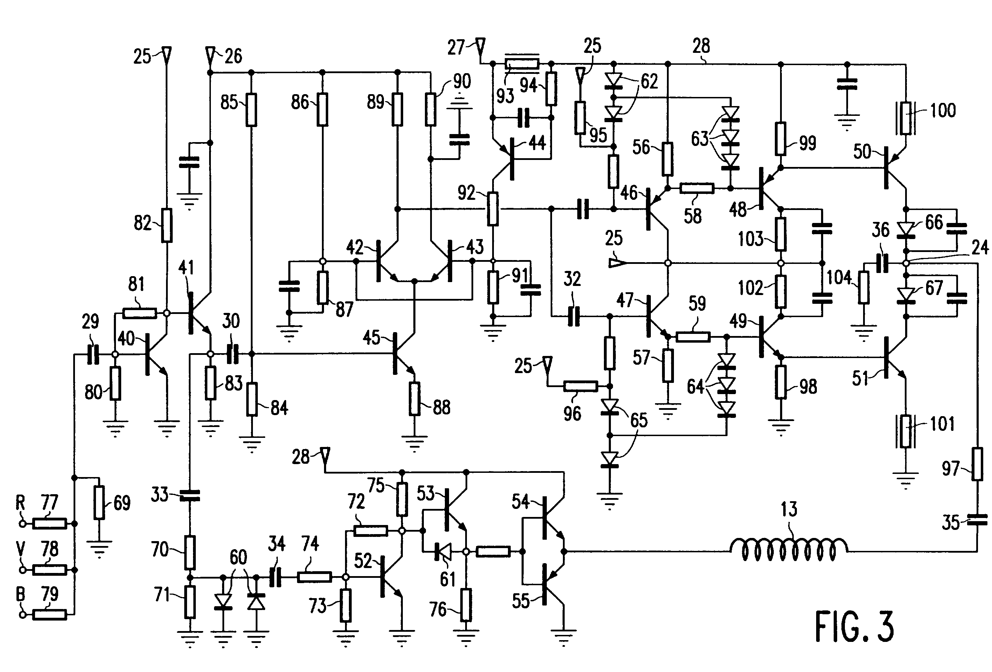

Le circuit de la figure 3 représente en détail une forme de réalisation particulière des éléments de la figure 2.
Les trois composantes R, V, B (rouge, vert, bleu) sont amenées, à gauche sur la figure, à un réseau de résistances 77,78,79 réunies en un point commun relié à la masse par une résistance 69 et qui constitue un circuit de matriçage fournissant sur le point commun la somme des trois composantes, c'est-à-dire reconstituant la luminance. Celle ci est transmise par une capacité 29 à la base d'un transistor 40 de type NPN monté suivant le montage dit en émetteur commun, et polarisé par un pont de deux résistances 80,81 connecté au collecteur du transistor. La constante de temps procurée par la capacité 29 et les différentes impédances qui lui sont reliées est choisie de façon à procurer l'effet différentiateur recherché. Le signal amplifié, prélevé sur une résistance de charge 82 reliée à une source de tension d'alimentation positive 25, est amené à la base d'un transistor 41 de type NPN, monté en émetteur suiveur, dont le collecteur est directement relié à une source de tension d'alimentation positive 26, et dont l'émetteur est relié à la masse par une résistance 83. Le montage comprenant la capacité 29 et les transistors 40,41 correspond au circuit différentiateur 17 de la figure 2.
A partir de l'émetteur du transistor 41, le signal amplifié est amené via une capacité 30 à la base d'un transistor 45 de type NPN, polarisé par un pont de deux résistances 84,85 connecté entre la source de tension d'alimentation 26 et la masse, et monté suivant le montage dit en émetteur commun avec néanmoins une résistance 88 dans sa connexion d'émetteur pour améliorer la linéarité. Ce transistor constitue la "queue" d'un montage différentiel bien connu constitué par le transistor 45 et par une paire de transistors 42,43 de type NPN chargés par des résistances de collecteur respectivement 89,90. Le transistor 42 est polarisé par un pont de deux résistances 86,87 connecté entre la source de tension d'alimentation 26 et la masse. La base est découplée à la masse par une capacité.
Le transistor 43, lui, est polarisé par un montage particulier constitué d'une source de courant 44 débitant dans deux résistances 92,91 en série, au point commun desquelles est reliée la base du transistor 43.
Le transistor 44 de type PNP constitue une source de courant, son émetteur est connecté à une source de tension d'alimentation positive 27. A cette même source 27 est connectée une première extrémité d'une résistance 93 de faible valeur, servant de résistance de mesure, dans laquelle passe le courant d'alimentation des étages de puissance. La base du transistor 44 est connectée via une résistance 94 à la seconde extrémité de la résistance 93 et ainsi la tension base émetteur directe de ce transistor augmente lorsque le courant dans l'étage de puissance augmente. Alors le courant dans les transistors 44 et 43 augmente aussi et par voie de conséquence celui dans le transistor 42 diminue. Le signal de sortie du montage est justement prélevé sur le collecteur du transistor 42, et le gain de l'ensemble diminue donc lorsque le courant augmente dans l'étage de puissance. Ceci réalise une régulation automatique de ce courant. La dite seconde extrémité de la résistance 93 constitue en outre une borne de tension d'alimentation référencée 28 qui alimente plusieurs éléments du circuit. Le montage comprenant les transistors 45,42,43 correspond à l'étage de réglage de gain 18 de la figure 2.
Le signal sur le collecteur du transistor 42 est amené via deux capacités 32,31 en même temps aux deux entrées d'un préamplificateur symétrique de type connu en soi, muni de deux voies d'amplification constituées respectivement d'une cascade de deux transistors NPN 47,49 montés tous deux suivant le montage dit émetteur suiveur et d'une cascade de deux transistors PNP 46,48 montés tous deux aussi en émetteurs suiveurs. Les collecteurs de ces quatre transistors sont tous reliés à la source de tension d'alimentation 25. Le transistor d'entrée 46 de la voie PNP est polarisé, à partir de la source de tension d'alimentation 28, au moyen de deux diodes en série 62 qui débitent vers l'alimentation 25 via une résistance 95, la base du transistor 46 étant reliée par une résistance au point commun entre la résistance 95 et les diodes 62. L'émetteur du transistor 46 est relié par une résistance 58 à la base du transistor 48, ce qui réalise la polarisation de ce dernier.
A partir de la tension d'alimentation 28, on trouve les deux tensions directes des diodes 62 en série, égales aux deux tensions correspondantes base-émetteur en série des transistors 48 et 46, ce qui procure une polarisation correcte de ces deux transistors.
Les transistors 47 et 49 de la voie NPN sont polarisés de façon semblable mais symétrique, à partir de la source de tension d'alimentation 25, au moyen d'une résistance 96 qui débite dans deux diodes en série 65 vers la masse, la base du transistor 47 étant reliée par une résistance au point commun entre la résistance 96 et les diodes 65, et l'émetteur du transistor 47 étant relié par une résistance 59 à la base du transistor 49.
La base du transistor 48 est reliée par une cascade de trois diodes en série 63 au point commun des deux diodes 62, ce qui entraîne un écrêtage du signal de base de ce transistor, l'empêchant de descendre de plus de trois fois la valeur d'une tension directe de diode, par rapport à la tension au point commun des deux diodes 62, qui est sensiblement égale justement à la valeur moyenne de polarisation de la base du transistor.
De façon symétrique, la base du transistor 49 est reliée par une cascade de trois diodes en série 64 au point commun des deux diodes 65, ce qui entraîne un écrêtage du signal de base de ce transistor, l'empêchant de monter de plus de trois fois la valeur d'une tension directe de diode, par rapport à la tension au point commun des deux diodes 65.
L'émetteur du transistor 46 est relié à l'alimentation 28 par une résistance de charge 56, celui du transistor 47 est relié à la masse par une résistance de charge 57, celui du transistor 48 est relié à l'alimentation 28 par une résistance de charge 99, et celui du transistor 49 est relié à la masse par une résistance de charge 98. Des résistances 102 et 103, découplées chacune par une capacité, en série dans les connexions de collecteur respectivement des transistors 49 et 48, servent à limiter la puissance dissipée dans ces transistors.
Le montage comprenant les transistors 46 à 49 correspond au préamplificateur 19 de la figure 2.
Enfin le signal sur les émetteurs des transistors 48 et 49 commande les bases des transistors de puissance PNP 50 et NPN 51 respectivement, montés en série l'un avec l'autre, tous deux montés en générateurs de courant, avec des résistances d'émetteur respectivement 100 et 101.
Deux diodes en série 66 et 67 sont insérées entre les collecteurs des transistors 50 et 51, et une extrémité du bobinage annexe 13 est connectée au point commun 24 de ces diodes. Ces diodes ont le rôle suivant : si par exemple un courant important circule dans le bobinage 13 et dans le transistor 51 et que ce dernier soit brusquement bloqué, la tension au point 24 croît alors de façon importante, et la présence de la diode 66 permet d'éviter une polarisation inverse du transistor.
Entre le point commun des diodes 66,67 et la masse se trouve en outre un montage en série d'une résistance 104 et d'une capacité 36, habituel dans ce genre d'amplificateur (montage dit "Boucherot"), et destiné à empêcher des auto-oscillations dans certaines circonstances. En outre un autre montage en série d'une résistance 97 et d'une capacité 35, lui aussi habituel dans ce genre d'amplificateur, est inséré en série avec le bobinage 13, pour amortir la self-induction.
Le montage comprenant les transistors 50 et 51 constitue l'étage de puissance référencé 20 sur la figure 2.

Le signal sortant du circuit de différentiation du signal vidéo, c'est-à-dire le signal sur l'émetteur du transistor 41, est amené aussi via une capacité 33 et une résistance 70, une capacité 34 et une résistance 74 à l'entrée d'un second préamplificateur constitué par les transistors 52 et 53. Deux diodes zener tête-bêche 60, connectées vers la masse entre la résistance 70 et la capacité 34, servent à limiter la tension de crête. Une résistance 71 a pour but de fixer le niveau moyen de tension continue. Le signal est transmis à la base du transistor 52 de type NPN monté suivant le montage dit en émetteur commun, et polarisé par un pont de deux résistances 72,73 connecté au collecteur du transistor. Le signal amplifié, prélevé sur une résistance de charge 75 reliée à la source de tension d'alimentation 28 (la même que celle alimentant les transistors 46 à 51) est amené à la base du transistor 53 de type NPN, monté en émetteur suiveur, dont le collecteur est directement relié à la source de tension d'alimentation 28, et dont l'émetteur est relié à la masse par une résistance 76. Une diode 61 montée tête-bêche avec la diode émetteur-base du transistor, sert à accélérer la transmission des transitions de tension négatives. Le montage comprenant les transistors 52 et 53 correspond au préamplificateur 21 de la figure 2.
Enfin le signal sur l'émetteur du transistor 53 est relié ensemble aux deux bases des transistors de puissance NPN 54 et PNP 55, montés en émetteurs suiveurs en série l'un avec l'autre et avec leurs émetteurs reliés l'un à l'autre.
L'autre extrémité du bobinage annexe 13 est connectée à la sortie de l'étage 54,55, au point commun des émetteurs des transistors 54,55.
Dans une réalisation donnant de bons résultats et faisant usage d'un bobinage déviateur horizontal annexe de 2,5 µH, les composants ont les valeurs ou sont des types suivants :
transistors :
   n°40,41 = BC848, n°42,43 = BC847 , n°44 = BC858 , n°45,47,49,52,53 = BC547 , n°46,48 = BC557 , n°50,55 = BD826, n°51,54 = BD825,
diodes :
   n°60 = BZV87 , n°61 à 65 = LL4148 , n°66,67 = LL4150,
capacités :
   n°29 = 100 pF, n°30,35,36 = 27 nF , n°31 à 34 = 1 nF,
résistances :
   n°70,74,83,89,90 = 1 kΩ, n°71 = 10 kΩ, n°72 = 12 kΩ, n°73 = 470 Ω, n°75,76 = 1,2 kΩ, n°77,78,79 = 2,2 kΩ, n°58,59,80,82 = 560 Ω, n°81 = 4,7 kΩ, n°84 = 15 kΩ, n°85 = 82 kΩ, n°86 = 22 kΩ, n°87 = 12 kΩ, n°88 = 390 Ω, n°91 = 68 kΩ, n°92,94 = 56 kΩ, n°93,100,101 = 10 Ω, n°95,96 = 15 kΩ, n°97 = 150 Ω, n°98,99 = 33 Ω, n°56,57,102,103 = 330 Ω, n°104 = 100 Ω. Les résistances 93, 100 et 101 sont des résistances dites de sécurité qui se détruisent sans flamme en cas de surcharge.
tensions d'alimentation :
   n°25= 15 volts, n°26= 30 volts, n°27= 33 volts.

## Revendications

1. Appareil d'affichage d'images muni
- d'une source de signal vidéo ayant ses informations vidéo affichées par le dit appareil,
- d'un circuit de balayage horizontal (7) avec un bobinage déviateur horizontal (15), et d'un circuit de balayage vertical (8), pour afficher les dites images au moyen d'un spot sur l'écran d'un tube-image,
- d'un circuit de modulation de vitesse du spot (12), couplé à la dite source de signal vidéo pour moduler la vitesse horizontale du spot en fonction du contenu vidéo du dit signal vidéo à l'aide d'un bobinage déviateur horizontal annexe (13), et comportant un circuit de différentiation du signal vidéo (17) suivi d'un amplificateur à transconductance (19) muni en sortie d'un étage de puissance du type générateur de courant (20) dont la sortie de courant est reliée à une première borne du bobinage déviateur horizontal annexe (13), caractérisé en ce que le circuit de modulation de vitesse comporte en outre un amplificateur de tension (21) muni en sortie d'un étage de puissance du type générateur de tension (22), dont l'entrée est reliée à la sortie du circuit de différentiation (17), et dont la sortie de tension est reliée à la seconde borne du bobinage déviateur horizontal annexer (13).

2. Appareil d'affichage d'images selon la revendication précédente, caractérisé en ce que l'étage de puissance de l'amplificateur de tension (22) est constitué essentiellement par un premier transistor (54) d'une première polarité monté selon le montage dit émetteur suiveur, dont le collecteur est connecté à une borne d'alimentation (28) et dont l'émetteur est relié à la seconde borne du bobinage déviateur horizontal annexe (13) et par un second transistor (55) d'une seconde polarité monté aussi selon le montage dit émetteur suiveur, dont le collecteur est connecté à une borne de référence et dont l'émetteur est relié à la seconde borne du bobinage déviateur horizontal annexe (13).

3. Appareil d'affichage d'images selon la revendication précédente, caractérisé en ce que les bases des deux transistors (54, 55) sont interconnectées et reliées à la sortie d'un préamplificateur de tension (21, 52, 53) qui précède l'étage de puissance et dont l'entrée est reliée à la sortie du circuit de différentiation du signal vidéo (17, 40, 41).

4. Appareil d'affichage d'images selon l'une quelconque des revendications 1 à 3, dont l'étage de puissance de l'amplificateur à transconductance (20) est constitué essentiellement par un premier transistor (50) d'une première polarité monté en générateur de courant, premier transistor dont l'émetteur est relié à une borne d'alimentation (27) et dont le collecteur débite dans la première borne du bobinage déviateur horizontal annexe (13), et par un second transistor (51) d'une seconde polarité monté en générateur de courant, second transistor dont l'émetteur est relié à une borne de référence et dont le collecteur débite aussi dans la première borne du bobinage déviateur horizontal annexe (13), caractérisé en ce que dans le trajet du courant de collecteur de chacun des deux transistors de l'étage de puissance est insérée une diode (66, 67) entre le collecteur et la première borne du bobinage déviateur horizontal annexe (13), diode montée dans le sens direct par rapport au courant du transistor afférent.

## Claims

1. A picture display apparatus comprising:
- a video signal source having its video signal information components for display by said apparatus,
- a horizontal scanning circuit (7) with a line deflection coil (15), and a vertical scanning circuit (8), for displaying said picture by means of a spot scanned on the screen of a picture tube,
- a spot velocity modulation circuit (12) coupled to said video signal source for modulating the horizontal velocity of the spot as a function of the video content of said video signal with the aid of an auxiliary line deflection coil (13), and comprising a video signal differentiator circuit (17) followed by a transconductance amplifier (19) having an output including a power stage (20) of the current generator type whose current output is connected to a first terminal of the auxiliary line deflection coil (13), characterized in that the velocity modulation circuit further includes a voltage amplifier (21) having an output including a power stage (22) of the voltage generator type with an input connected to the output of the differentiator circuit (17) and having an output connected to the second terminal of the auxiliary line deflection coil (13).

2. A picture display apparatus as claimed in the preceding claim,
characterized in that the power stage (22) of the voltage amplifier is basically constituted by a first transistor (54) of a first polarity, arranged in an emitter follower configuration, having a collector connected to a power supply terminal (28) and an emitter connected to the second terminal of the auxiliary line deflection coil (13), and a second transistor (55) of a second polarity, also arranged in an emitter follower configuration, having a collector connected to a reference terminal and an emitter connected to the second terminal of the auxiliary line deflection coil (13).

3. A picture display apparatus as claimed in the preceding claim,
characterized in that the bases of the two transistors (54,55) are interconnected and are connected to the output of a voltage preamplifier (21,52,53) which precedes the power stage and has an input connected to the output of the video signal differentiator circuit (17,40,41).

4. A picture display apparatus as claimed in any one of claims 1 to 3, in which the power stage of the transconductance amplifier (20) is basically constituted by a first transistor (50) of a first polarity, arranged as a current generator, the emitter of the first transistor being connected to a power supply terminal (27) and the collector being coupled to the first terminal of the auxiliary line deflection coil (13), and a second transistor (51) of a second polarity, arranged as a current generator, with an emitter of this second transistor connected to a reference terminal and the collector coupled to the first terminal of the auxiliary line deflection coil (13), characterized in that the current path of the collector of each of the two transistors of the power stage incorporates a diode (66,67) connected between the collector and the first terminal of the auxiliary line deflection coil (13), each diode being arranged in a forward direction relative to the current of the associated transistor.

## Patentansprüche

1. Bildanzeigevorrichtung versehen mit
- einer Bildsignalquelle zur Anzeige der Bildinformationen durch die besagte Vorrichtung,
- einer horizontale Abtastschaltung (7) mit einer horizontalen Bildablenkspule (15) und einer vertikalen Abtastschaltung (8) zur Anzeige der besagten Bilder über einem Leuchtpunkt auf dem Bildschirm einer Bildröhre,
- einer Modulationsschaltung der Leuchtpunktgeschwindigkeit (12), gekoppelt mit der besagten Bildsignalquelle für die horizontale Geschwindigkeit des Leuchtpunktes entsprechend dem Bildinhalt des besagten Bildsignals mittels einer horizontalen Nebenablenkspule (13), und die einen Differentiator des Bildsignals (17) enthält, gefolgt von einem Transkonduktanzverstärker (19), am Ausgang mit einer Leistungsstufe vom Typ Stromgenerator (20) versehen, dessen Stromausgang mit einer ersten Klemme der horizontalen Nebenablenkspule (13) verbunden ist, dadurch gekennzeichnet, daß die Geschwindigkeitsmodulationsschaltung außerdem einen Spannungsverstärker (21) enthält, am Ausgang mit einer Leistungsstufe vom Typ Spannungsgenerator (22) versehen, dessen Eingang mit dem Ausgang des Differentiators (17) verbunden ist und dessen Spannungsausgang mit der zweiten Klemme der horizontalen Nebenablenkspule (13) verbunden ist.

2. Bildanzeigevorrichtung nach dem vorhergehenden Anspruch, dadurch gekennzeichnet, daß die Leistungsstufe des Spannungsverstärkers (22) hauptsächlich aus einem ersten Transistor (54) einer ersten Polarität gebildet wird, nach der sogenannten Emitterfolgerschaltung angeordnet, wobei der Kollektor mit einer Versorgungsklemme (28) verbunden ist und der Emitter mit der zweiten Klemme der horizontalen Nebenablenkspule (13) verbunden ist, und aus einem zweiten Transistor (55) einer zweiten Polarität, ebenfalls nach der sogenannten Emitterfolgerschaltung angeordnet, wobei der Kollektor mit einer Referenzklemme verbunden ist und der Emitter mit der zweiten Klemme der horizontalen Nebenablenkspule (13) verbunden ist.

3. Bildanzeigevorrichtung nach dem vorhergehenden Anspruch, dadurch gekennzeichnet, daß die Basen der beiden Transistoren (54, 55) untereinander verbunden sind und zum Ausgang eines Spannungsvorverstärkers (21,52,53) führen, der einer Leistungsstufe vorausgeht und dessen Eingang mit dem Ausgang des Differentiators des Bildsignals (17,40,41) verbunden ist.

4. Bildanzeigevorrichtung nach einem beliebigen Anspruch 1 bis 3, dadurch gekennzeichnet, daß die Leistungsstufe des Transkonduktanzverstärkers (20) hauptsächlich aus einem ersten Transistor (50) einer ersten Polarität gebildet wird, als Stromgenerator geschaltet, wobei der Emitter dieses ersten Transistors mit einer Versorgungsklemme (27) verbunden ist und der Kollektor zur ersten Klemme der horizontalen Nebenablenkspule (13) führt, und einem zweiten Transistor (51) einer zweiten Polarität, als Stromgenerator geschaltet, wobei der Emitter dieses zweiten Transistors mit einer Referenzklemme verbunden ist und der Kollektor ebenfalls zur ersten Klemme der horizontalen Nebenablenkspule (13) führt, dadurch gekennzeichent, daß auf dem Stromweg des Kollektors jeder der beiden Transistoren der Leistungsstufe eine Diode (66,67) zwischen dem Kollektor und der ersten Klemme der horizontalen Nebenablenkspule (13) eingefügt ist, wobei die Diode in bezug auf den Strom des betreffenden Transistors in direkter Richtung angeordnet ist.
